(19) Europäisches Patentamt / European Patent Office / Office européen des brevets

(11) **EP 3 768 411 B1**

## (12) EUROPEAN PATENT SPECIFICATION

(45) Date of publication and mention
of the grant of the patent:
**07.06.2023  Bulletin 2023/23**

(21) Application number: **19712769.9**

(22) Date of filing: **22.03.2019**

(51) International Patent Classification (IPC):
**B01D 53/04** (2006.01)     **B01D 53/047** (2006.01)

(52) Cooperative Patent Classification (CPC):
**B01D 53/04;** B01D 53/0476; B01D 2253/10;
B01D 2256/10; B01D 2256/22; B01D 2257/102;
B01D 2257/504; B01D 2258/0283;
B01D 2259/40011; B01D 2259/40013;
B01D 2259/4002; B01D 2259/40028;
B01D 2259/403; Y02C 20/40

(86) International application number:
**PCT/EP2019/057309**

(87) International publication number:
**WO 2019/180241 (26.09.2019 Gazette 2019/39)**

(54) **PROCESS FOR SEPARATING A HEAVY GAS COMPONENT FROM A GASEOUS MIXTURE**

VERFAHREN ZUR ABSCHEIDUNG EINER SCHWEREN GASKOMPONENTE AUS EINEM GASGEMISCH

PROCÉDÉ DE SÉPARATION D'UN COMPOSANT DE GAZ LOURD À PARTIR D'UN MÉLANGE GAZEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.03.2018   EP 18382203**

(43) Date of publication of application:
**27.01.2021   Bulletin 2021/04**

(73) Proprietor: **GAS N2ITROGEN, S.L.**
**08181 Sentmenat (ES)**

(72) Inventors:
• **GUTIÉRREZ ORTEGA, Angel Eduardo**
**08016 BARCELONA (ES)**

• **NOMEN RIBÉ, Rosa**
**08017 BARCELONA (ES)**
• **GONZÁLEZ OLMOS, Rafael**
**08017 BARCELONA (ES)**
• **MARTÍNEZ HUGUET, Oriol**
**08181 SENTMENAT (ES)**

(74) Representative: **ZBM Patents - Zea, Barlocci & Markvardsen**
**Rambla Catalunya, 123**
**08008 Barcelona (ES)**

(56) References cited:
WO-A2-2009/126607     US-A- 4 770 676
US-A1- 2011 315 140     US-A1- 2012 279 391

**Description**

**Technical Field**

The present invention relates to an adsorption-desorption process for separating a heavy gas component, more particularly carbon dioxide, from a gaseous mixture and obtaining it in high purity and recovery.

**Background Art**

The largest proportion of $CO_2$ emissions worldwide comes from burning fossil fuels for power and industry processes such as making cement, steel, or the chemical industry. Carbon capture and storage (CCS) aims at avoiding the release of waste $CO_2$ into the atmosphere thus preventing the climate change. CCS includes three main steps: $CO_2$ capture from gaseous wastes of industrial processes or combustion gases, transport to a storage site, and storage of $CO_2$ normally in an underground geological formation. Several technological options have been disclosed for these steps. However, many technological hurdles must be overcome before commercialization.

Carbon capture and utilization (CCU) has started to attract attention worldwide as an alternative to geological storage of the $CO_2$ by converting the captured $CO_2$ into commercial products, either by directly using the captured $CO_2$ in another application, or by converting it into a new molecule in applications such as food processing, preservation and packaging, water treatment, or stunning of swine and poultry for example.

$CO_2$ capture is the first and most expensive step in a $CO_2$ capture and storage/utilization process. The challenge for capturing the $CO_2$ is not just the large amounts involved, but also the dilution of $CO_2$ with other gases from which it must be separated. In fact, most of the capture processes that have been described in several publications are not currently applied in industrial processes due to the high price and lack of profitability.

There are three basic options for capturing the carbon dioxide from waste gases: precombustion, oxy-fuel process, and post-combustion. The post-combustion method is currently preferred because it offers flexibility and allows retrofitting existing power plants. Since the $CO_2$ concentration in flue gas after a conventional combustion process is normally quite low (<20%), the energy penalty and associated costs for reaching a concentration of $CO_2$ above 95.5% needed for transport and storage or other applications are in most cases very high.

Several post-combustion $CO_2$ capture processes have been developed, such as absorption in solvents, adsorption by solid sorbents (including pressure and vacuum swing adsorption), cryogenic distillation, membrane separation.

Among these, absorption by amines is most commonly used. In this process the amines absorb the $CO_2$ from the flue gas and when the absorber column becomes saturated, a stream of superheated steam is passed through it (stripping) to release the trapped $CO_2$. The disadvantages of this process are the high demand of energy needed for regenerating the solvent in the stripping process and the associated corrosion problems. The energy penalty also applies to other post-combustion technologies, either through direct energy costs or through a reduced energy efficiency associated with their operation. Recently, vacuum pressure swing adsorption (VPSA) has become a potential tool for the removal of $CO_2$ from flue gas because of its energy efficiency and operating flexibility. Still, reports on pilot-scale VPSA separations of $CO_2$ are quite scarce.

US2011315140 discloses a vacuum pressure swing absorption (VPSA) process to separate oxygen from nitrogen. WO2009126607 discloses a process for the recovery of $CO_2$ from combustion sources such as flue gas. The $CO_2$ is captured by subjecting the $CO_2$ gas feed stream to a temperature swing adsorption step which comprises an adsorption step for producing a dry carbon dioxide-depleted stream, and an adsorbent regeneration step comprising heating the adsorbent bed to produce a water vapor-free carbon dioxide stream. US4770676 discloses high purity methane and carbon dioxide recovered in an integrated multi-column adsorption system having a temperature swing adsorption section (TSA) for pre-treatment of crude landfill gas to remove trace impurities therefrom, and a pressure swing adsorption section (PSA) for bulk separation of $CO_2$ from methane. US2012279391 discloses adsorption of $CO_2$ from a gas mixture comprising $N_2$ under elevated pressure and increasing the $CO_2$-concentration within the bed by depressurization, followed by a bed regeneration.

Therefore, from what is known in the art there is still a need to develop further post-combustion processes that allow the capture of $CO_2$ while lowering the energy requirements and overcoming the problems of the prior art.

**Summary of Invention**

The inventors have developed an adsorption-desorption process for the recovery of a heavy gas component (carbon dioxide), from a multicomponent gas mixture, that mostly contains a light gas component (nitrogen). The separation process of the invention is based on the fact that the heavy gas component of the gas mixture is selectively adsorbed by an adsorbent material contained in an adsorber bed, while the light gas component that has a lower affinity or selectivity for the absorbent mainly passes through the absorbent without being retained or being retained to a lesser extent. After the separation, the heavy component is desorbed and recovered, and the adsorbent is regenerated such that the process can operate in a continuous manner.

The inventors have found that when the process comprises specific steps in which the adsorbent material containing the heavy gas component is enriched with more heavy gas component, the heavy gas component may be recovered with higher recovery and purity while expending reasonably low energy. This is illustrated in the pilot-scale experiments shown below in the examples.

Thanks to the dynamic control that may be used in some steps of the process for specific parameters, the process of the invention has the advantage that it is efficient not only for a wide range of concentrations of the heavy gas component in the multicomponent gas mixture to be separated, but it is also efficient when there are fluctuations in the concentration of the heavy phase in the gas mixture. Furthermore, due to the optimal use of the capacity of the adsorber bed the total energy consumption may be reduced.

Additionally, the production of the heavy gas component, in particular its purity, can be adjusted depending on the consumption needs. For example, the production may be increased by using a plurality of adsorber bed systems and/or using bed systems containing a plurality of interconnected individual beds. This feature allows that the process is able to be adapted for a variety of situations in accordance with specific requirements of each plant in which the process is to be implemented.

Therefore, an aspect of the invention relates to an adsorption-desorption process for the recovery of a heavy gas component from a multicomponent gas mixture, comprising a heavy gas component which is carbon dioxide, and a light gas component which is nitrogen, wherein the process comprises at least one cycle of steps carried out in a bed system, wherein the steps of one cycle comprise:

> a) introducing a multicomponent gas mixture (1) at a pressure from 100 to 600 KPa into a bed system (2) which is a hollow structure enclosing an interior volume and which has a length which is higher than its diameter, wherein the adsorbent that retains the heavy gas component of the multicomponent gas mixture (1), while letting out a light-component-enriched-stream (3) from the bed system (2);
> b) pressurizing the bed system (2) by introducing a heavy-component-enriched-stream (4) into the bed system (2), until a pressure higher than the pressure of step a), in particular until a pressure which is from 1.1 to 3 times the pressure of step a), this pressure being from 110 to 900 KPa; and then stopping feeding (4);
> c) depressurizing the bed system (2) by letting out a light-component-enriched-stream (5) from the bed system (2), until a pressure equal to or lower than the pressure of step a), in particular until a pressure which is from 0.5 to 1 times the pressure of step a), this pressure being from 100 to 600 KPa; and then stopping the removal of the light-component-enriched-stream (5);
> d) repeating steps b) and c) until the relative concentration of the heavy gas component in the light-component-enriched-stream (5) with respect to the concentration of the heavy gas component in the heavy-component-enriched-stream (4) is equal to or higher than 5 mol%;
> e) desorbing the heavy gas component from the bed system (2) to give heavy-component-enriched-stream (6) containing the heavy gas component; and regenerating the adsorbent.

## Brief Description of Drawings

Figure 1 is a schematic simplified flow diagram that illustrates a particular embodiment of a process cycle comprising steps a) to e) which is carried out in a bed system (2).

Figure 2 is a schematic flow diagram that illustrates a particular embodiment of process step e) including steps i) to iii) which are carried out in a bed system (2).

Figure 3 is a schematic flow diagram that illustrates a particular embodiment of a process cycle including operations 1-7: Low-pressure Feed (LPF) (1), High-pressure Reflux (HPR) (2), Light Component Depressurization (LCD) (3), Heavy Component Reflux (HCR) (4), Low-pressure Recuperation (LPR) (5), Bidirectional Purge (BDP) (6), and Equalization Pressurization (EQP) (7).

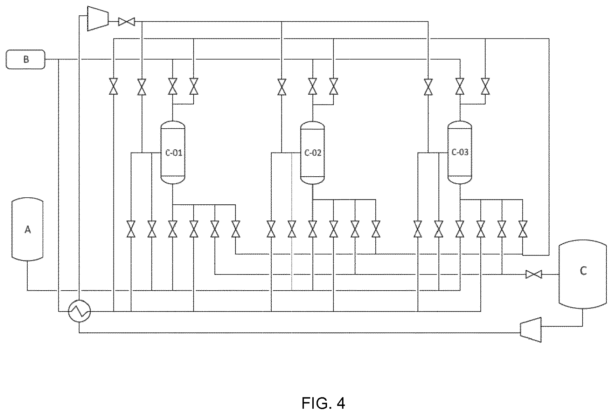

Figure 4 is a schematic flow diagram that illustrates a particular embodiment of a system for carrying out the separation process comprising three bed systems (A: Mix storage tank; B: Light fraction storage tank; C: Heavy fraction storage tank).

**Detailed description of the invention**

All terms as used herein in this application, unless otherwise stated, shall be understood in their ordinary meaning as known in the art. Other more specific definitions for certain terms as used in the present application are as described below and are intended to apply uniformly through-out the specification and claims.

The term "about" or "around" as used herein refers to a range of values $\pm$ 10% of a specified value. For example, the expression "about 10" or "around 10" includes $\pm$ 10% of 10, i.e., from 9 to 11.

For the purposes of the invention, the pressures indicated herein refer to absolute pressures, i.e., including the atmospheric pressure. In other words, the pressures as indicated herein refer to the pressures above that of an absolute vacuum (which is zero pressure).

The percentages referred herein are molar or volume percentages. The term "molar percentage" (mol%) refers to the percentage of a component (in moles) in relation to the total moles present in a determined mixture provided that the sum of the amounts of the components of the mixture is equal to 100%.

The term "relative concentration of the heavy gas component" as used herein refers to the concentration of the heavy gas component (in mol) in a first mixture with respect to the concentration of the heavy gas component (in mol) in a second mixture and is expressed in %. For example, if the concentration of the heavy gas component in a first mixture is 18 mol%, and the concentration of the heavy gas component in a second mixture is 5 mol%, then, the relative concentration of the heavy gas component in the second mixture with respect to the first mixture is 27.8 mol%.

The term "relative volume of a gas" in a specific stream refers to the normal volume of the gas (in L at normal temperature and pressure conditions NTP) in that stream with respect to the total normal volume of the bed system (in L at standard temperature and pressure conditions) and is expressed in %.

The term "flue gas" includes the exhaust gas from any sort of combustion process (including coal, oil, natural gas, petrochemical compounds, biomass, glass raw material, and the like). Typically, a flue gas contains oxygen ($O_2$) in a concentration from 0 to 8 mol%; carbon monoxide (CO) in a concentration from 0 to 100 $ppm_v$; nitrogen oxides ($NO_x$) including NO and $NO_2$, in a concentration from 0 to 800 $ppm_v$; sulfur oxides ($SO_x$) including sulfur dioxide ($SO_2$), in a concentration from 0 to 1000 $ppm_v$; hydrogen ($H_2$), in a concentration from 0 to 10 $ppm_v$; carbon dioxide ($CO_2$) in a concentration from 9 to 20 mol%; and water ($H_2O$) in a concentration from 5 to 18 mol%, being the remaining up to 100 mol% nitrogen; wherein the % are expressed with respect to the total moles of the gas mixture.

The term $ppm_v$ as used herein refers to ppm in volume.

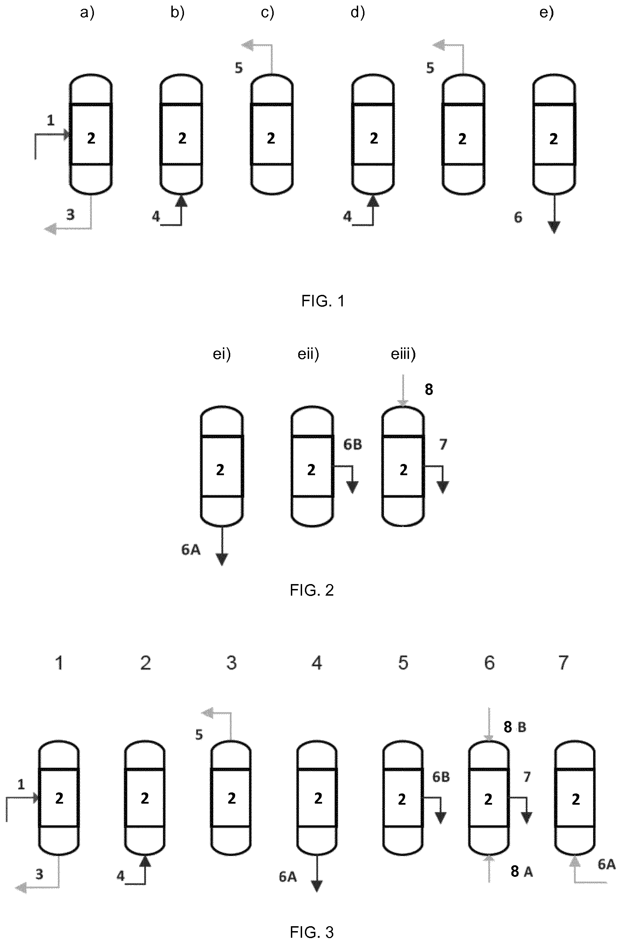

The terms "bed system", "column", "adsorber" or "adsorber bed" are used herein interchangeably and refer to a hollow structure, in particular a cylindrical structure, enclosing an interior volume which contains the solid adsorbent material. The bed system has typically a length (e.g., 2 m) which is higher than its width or diameter (e.g., typical diameter 0.15 m). The bed system may have different gas inlets and outlets that can be located at the top of the column, at the bottom of the column, or along the axial part or its length (i.e., along the longer part of the bed) as is for example shown in Figure 2 eii) or eiii).

As used herein, the term "pressurize" means to increase the pressure within the bed system with respect to the pressure at which the bed system was before the pressurization step. By contrast, the term "depressurize" is intended to mean decreasing the pressure within the bed system to a pressure lower than the pressure of the bed system before the depressurization step is performed. For example, the pressures of the bed system can be monitored by pressure transmitters, the regulation of the pressure system is controlled by pressure gas controllers based on a supply pressure to carry out the automatic process.

For the purposes of the invention, the terms "heavy gas component", "heavy component", "heavy phase" or "heavy fraction" as used herein refer to the component of the multicomponent gas mixture that is more strongly adsorbed by the adsorbent material, i.e., the component that has higher tendency to be retained in the pores of the adsorbent. This means that the adsorber is more selective or has more affinity for the heavy component. By contrast, the terms "light gas component", "light component", "light phase" or "light fraction" refer to the component of the multicomponent gas mixture that are weaklier adsorbed by the adsorbent material, i.e., the components that have lower tendency to be retained in the pores of the adsorbent. For the purposes of example, in a mixture of flue gas, carbon dioxide is considered the heavy gas component, and nitrogen is considered the light gas component according to the above definitions.

Furthermore, the term "multicomponent gas mixture" is also referred to as "feed mixture". Besides, the term "feeding" refers to the introduction of a gas stream into a bed system. In some embodiments it can also be referred to as "reflux".

The term "light-component-enriched-stream" refers herein to a gas stream that mostly contains the light gas components, in particular it contains equal to or more than 60 mol%, more particularly equal to or more than 70 mol%, 80 mol%, 90 mol%, 95 mol%, of the light gas components. By contrast, the term "heavy-component-enriched-stream" refers to a gas stream that mostly contains the heavy gas component, in particular it contains equal to or more than 60 mol%, more particularly equal to or more than 70 mol%, 80 mol%, 90 mol%, 95 mol%, of the heavy gas components. For the purposes of example, in a mixture of flue gas, carbon dioxide is the heavy gas component and is contained in carbon-dioxide-streams, and nitrogen is the light gas component and is contained in nitrogen-enriched-streams.

The term "adsorbent" as used herein refer to the material that selectively captures the heavy gas component from the multicomponent gas mixture. An ideal adsorbent should have high working capacity (high adsorption capacity and good regeneration conditions), large pore dimensions to limit mass transfer resistances, thermal and mechanical stability, and recyclability. Some examples of adsorbents that can be used for in the process of the invention, in particular for carbon dioxide capture, are disclosed for example in Journal of Industrial and Engineering Chemistry 2015, Vol. 23, Pages 1-11. For the purposes of the invention, the adsorbent may consist in a single adsorbent material or in a mixture of two or more different types of adsorbents.

The present invention relates to an adsorption-desorption process for the recovery of a heavy gas component from a multicomponent gas mixture. The term "adsorption-desorption process" refers to the fact that the process comprises at least one adsorption step (step a), in which a component is adsorbed to an adsorbent material, and at least one desorption step (step e), in which the component that had been previously adsorbed is desorbed from the adsorbent material and the adsorbent is thus regenerated.

As it is known in the art, the adsorbent may be regenerated in several ways, including by pressure, temperature, or electric swings. Depending on the method used, the adsorption-desorption process receives a different name. Thus, in a Pressure Swing Adsorption (PSA) process the adsorbent is regenerated by lowering the total pressure. When the lower pressure is below atmospheric pressure, the process is called vacuum pressure swing adsorption (VPSA). By contrast, in a Temperature Swing Adsorption (TSA) process the adsorbent is regenerated by raising the temperature while pressure is maintained approximately constant; and in Electric Swing Adsorption (ESA) the adsorbent is regenerated by applying an electric field. There are other types of desorption processes that are variants of the above processes such as rapid TSA, rapid PSA or rapid VPSA, or combinations of different strategies such as Temperature Vacuum Swing Adsorption TVSA. All these techniques and variants thereof are included for the purposes of the invention since they may be applied in the process as previously described.

The process of the invention comprises at least one cycle, each cycle comprising at least steps a) to e) as defined above. In one embodiment, optionally in combination with one or more features of the various embodiments described above or below, the process of the invention operates continuously and comprises at least two cycles as defined above. More particularly, when more than one bed systems are used, the process comprises at least one cycle comprising at least steps a) to e) as defined above for each bead system used,

The multicomponent gas mixture used as starting gas stream may be any gas mixture that comprises at least a heavy gas component and at least a light gas component which can be separated by an adsorber.

In one particular embodiment, optionally in combination with one or more features of the various embodiments described above or below, the heavy gas component is carbon dioxide and the multicomponent gas mixture comprises at least nitrogen, in particular, in a concentration from 50 to 95 mol%, more particularly from 70 to 95 mol%, and from 85 to 95 mol%; and carbon dioxide, in particular, in a concentration from 5 to 30 mol%, more particularly from 7 to 20 mol%, wherein the % are given with respect to the total amount of moles in the mixture, provided that the sum of the amounts of the components of the multicomponent gas mixture is equal to 100%.

In one particular embodiment, optionally in combination with one or more features of the various embodiments described above or below, the multicomponent gas mixture is flue gas.

Pre-treatment

Depending on the multicomponent gas mixture used as starting gas stream in the process of the invention, it may be convenient to carry out a pre-treatment of the gas. This is usually the case when the gas mixture contains components such as nitrogen oxides, or sulfur oxides. As it is known these components may act as contaminants of the adsorbent material since they may be strongly adsorbed and decrease the efficiency of the separation process. Pre-treatment processes for removing undesired contaminants present in the multicomponent gas mixture are well-known in the art. They may include one or more steps selected from compression steps, filtration and centrifugation steps, scrubber steps, adsorption steps, drying steps, and the like. From what is known in the art, the skilled person will be able to easily determine the steps to be performed to reduce the content of the potentially contaminant components present in the multicomponent gas mixture, if necessary.

After such a pre-treatment step, the content of water is generally reduced to a concentration equal to or lower than 5 mol%, more particularly equal to or lower than 1 mol%, even more particularly 0.05 mol% before starting the separation process. In one particular embodiment, optionally in combination with one or more features of the various embodiments described above or below, the multicomponent gas mixture is a pre-treated flue gas comprising carbon dioxide ($CO_2$) in a concentration from 5 to 30 mol%, more particularly 5 to 18 mol%; and nitrogen ($N_2$) in a concentration from 50 to 95 mol%, more particularly from 70 to 95 mol%, and from 82 to 95 mol%, wherein the % are expressed with respect to the total moles of the gas mixture.

Adsorbents

As mentioned above, the separation process of the invention is based on the different affinity of the heavy gas component and the light gas component contained in a gas mixture for an adsorbent material.

Non-limiting examples of adsorbent materials include zeolites, metal-organic frameworks (MOFs), silicalites, aluminosilicates, titanosilicates, germanosilicates, covalent-organic frameworks, carbon molecular sieves (CMSs), activated carbon, or silica gel. If a combination of two adsorbent materials is used the adsorbents can be of different types, e.g., aluminosilicates and zeolites, or of the same type e.g., with different particle size, e.g., 1.5 mm zeolite and 3 mm zeolite.

As used herein, the term "zeolite" refers to an open three-dimensional framework structure composed of tetrahedrally-coordinated atoms ("T-atoms") connected with oxygen atoms. Typically, the T-atoms include silicon and aluminum, but may also include phosphorus, titanium, beryllium, germanium, and other metals. The structure may also include extra-framework cations, such as hydrogen, sodium, potassium, barium, calcium, magnesium, iron, gallium, germanium, and others. Traditional zeolites include zeolites A, X and Y. The present invention encompasses zeolites with binder containing zeolites as well as binderless zeolites.

Activated carbon can be conveniently obtained from natural products by proper thermal and/or chemical treatment. Activated carbon can be tailor-made with pore widths in the range of some tenths of a nanometer, giving rise to carbon molecular sieves.

In one particular embodiment, optionally in combination with one or more features of the various embodiments described above or below, the adsorbent is selected from the group consisting of zeolites, metal-organic frameworks, silicalites, aluminosilicates, titanosilicates, germanosilicates, covalent-organic frameworks, carbon molecular sieves (CMSs), activated carbon, silica gel and combinations thereof. More particularly, the adsorbent is selected from the group consisting of activated carbon, zeolite, aluminosilicates, silica gel, activated alumina, carbon molecular sieves (CMSs), and combinations thereof, and even more particularly, the adsorbent is selected from the group consisting of activated carbon, zeolite, aluminosilicates, and combinations thereof.

In a more particular embodiment, optionally in combination with one or more features of the various embodiments described above or below, the adsorbent is a zeolite, more particularly a zeolite selected from the group consisting of CMSs, zeolite 13X and zeolite 5A, even more particularly zeolite 13X binderless.

Figure 1 is a schematic simplified flow diagram illustrating a particular embodiment of a cycle of the process of the invention comprising steps a) to e) which is carried out in a bed system (2).

Low-pressure Feed (LPF)

In step a) of the process of the invention a multicomponent gas mixture (1) is introduced at a pressure from 100 to 600 KPa, e.g., 100, 200, 300, 400, 500, 600 KPa, into the bed system (2) containing the adsorbent that retains the heavy gas component of the multicomponent gas mixture (1). Simultaneously, a light-component-enriched-stream (3) is let out from the bed system (2). This step or operation is herein referred to as Low-pressure Feed (LPF). As mentioned above, the heavy gas component of the multicomponent gas mixture is selectively adsorbed by the adsorbent material contained in the bed system (2), while the light gas component that has a lower affinity for the adsorbent mainly passes through the adsorbent without being retained and exits the bed system more easily than the heavy gas component.

The concentration of the heavy gas component in the light-component-enriched-stream (5) can be monitored by an appropriate heavy gas component sensor. Sensors for the detection and quantification of heavy gas components are well-known in the art. Depending on the heavy gas component to be measured, the skilled person will choose the most convenient sensor. For example, when the heavy gas component is carbon dioxide, the sensor can be a non-dispersive infrared absorption (NDIR) carbon dioxide sensor.

In order to optimize the process, when the relative concentration of the heavy gas component in the light-component-enriched-stream (3) with respect to the concentration of the heavy gas component in the feed mixture (1) is from 1 to 30 mol%, more particularly from 3 to 15 mol%, or from 5 to 30 mol%, or 10 to 30 mol%; the feeding (1) and the removal of the light-component-enriched-stream (3) can be stopped by closing the corresponding inlet and outlet.

Thus, in one particular embodiment, optionally in combination with one or more features of the various embodiments described above or below, the feeding of the multicomponent gas mixture (1), and the removal of the light-component-enriched-stream (3) is stopped when the relative concentration of the heavy gas component in the light-component-enriched-stream (3) with respect to the concentration of the heavy gas component in the feed mixture (1) is from 1 to 30 mol%, more particularly from 3 to 15 mol%, or from 5 to 30 mol%, or 10 to 30 mol%; as measured by an appropriate sensor.

The feeding of the multicomponent gas mixture (1) is carried out through an inlet that may be located at different positions. Thus, the inlet may be located along the axial part (lateral inlet) or at the bottom of the bed system (2).

For the purposes of the invention, when it is indicated that an inlet may be located along the axial part (lateral inlet) of the bed system, two different options are meant: either a single inlet at a specific height of the bed system, or alternatively, multiple inlets in the same circumference, i.e., all of them at the same height.

When the multicomponent gas mixture (1) is introduced from the bottom, the light-component-enriched-stream (3) is generally let out from the top of the bed system (not shown). Alternatively, when the multicomponent gas mixture (1) is introduced along the axial part, the light-component-enriched-stream (3) is generally let out from the bottom of the bed system (see Figure 1).

The location of the inlet along the axial part at a certain height from the bottom of the bed system, also referred herein to as feed point height *(FPH),* has the advantage that the effective working capacity of the bed system is increased. This is because the heavy gas component zone increases while the heavy gas component is selectively adsorbed in the bed system unlike the light gas component. For the purposes of the invention, the effective working capacity of a bed system is calculated from the feed amount and the amount of heavy gas component that is removed from the bed system at a later stage (during desorption).

In one particular embodiment, optionally in combination with one or more features of the various embodiments described above or below, the inlet located along the axial part (*FPH*) is placed at a distance from 0.2 to 0.8 times, more particularly from 0.25 to 0.5 times, even more particularly from 0.3 to 0.4 times, the total length of the bed system.

Therefore, in one particular embodiment, optionally in combination with one or more features of the various embodiments described above or below, in step a) the multicomponent gas mixture (1) is introduced through an inlet located at along the axial part (*FPH*) of the adsorber bed (2), more particularly, the inlet along the axial part (*FPH*) is placed at a distance from 0.2 to 0.8 times, more particularly from 0.25 to 0.5 times, even more particularly from 0.3 to 0.4 times, the total length of the bed system, and the light-component-enriched-stream (3) is let out through an outlet located at the bottom of the adsorber bed (2).

In one alternative embodiment, optionally in combination with one or more features of the various embodiments described above or below, in step a) the multicomponent gas mixture (1) is introduced through an inlet located at the bottom of the bed system (2), and the light-component-enriched-stream (3) is let out through an outlet located at the top of the bed system (2). It is also possible in the process of the invention to firstly carrying out the feeding as in the first embodiment above and then change it to the feeding described in the later embodiment.

When the process is performed continuously, and the process comprises a purge step as disclosed herein, then the light-component-enriched-stream (3) obtained in this step may be recirculated to the purge step (8) (see Figure 2).

In steps b) and c) of the process of the invention the bed system is pressurized and depressurized, respectively, in alternate steps that are repeated several times up to a certain time point as described below. The repetition of the sequence of these steps has the purpose of enriching the bed system with the heavy gas component by introducing heavy-component-enriched-stream and removing part of the light gas component by letting out a light-component-enriched-stream. Without being bound to theory, it is believed that this is due to the fact that the selective adsorption of the heavy gas component is favored when the partial pressure of the heavy component is increased.

## High-pressure Reflux (HPR)

In step b) the bed system (2) is pressurized by introducing a heavy-component-enriched-stream (4) (see Figure 1), until the pressure is from 110 to 900 KPa; more particularly from 200 to 900; even more particularly from 300 to 700 KPa, e.g., 110, 200, 300, 400, 500, 600, 700, 800, 900 KPa. This pressure is higher than the pressure at which the Low-pressure Feed (LPF) (step a) operates. When the target pressure is reached, reflux (4) is stopped. This step or operation is herein referred to as High-pressure Reflux (HPR).

In one particular embodiment, optionally in combination with one or more features of the various embodiments described above or below, in step b) the bed system (2) is pressurized until a pressure which is from 1.1 to 3 times, more particularly from 1.1 to 2.5 times, e.g., 1.2, 1.5, 1.8, 2, 2.2, 2.5, 2.8 times the pressure at which the LPF (step a) operates.

In one particular embodiment, optionally in combination with one or more features of the various embodiments described above or below, the heavy-component-enriched-stream (4) is introduced through an inlet located at the bottom of the bed system (2).

When the process is performed continuously, then the heavy-component-enriched-stream (4) used in this step may come from the product that has been separated in a previous cycle. Thus, in one particular embodiment, optionally in combination with one or more features of the various embodiments described above or below, the heavy-component-enriched-stream (4) is obtained in one or more previous cycles (e.g., stream (6B)).

## Light Component Depressurization (LCD)

In step c) the bed system (2) is depressurized by letting out a light-component-enriched-stream (5) from the bed system (2) (see Figure 1), at a pressure equal to or lower than the pressure of step a) (Low-pressure Feed (LPF)), being this pressure from 100 to 600 KPa, e.g., 100, 200, 300, 400, 500, 600 KPa. Once this pressure is reached, the removal of the light-component-enriched-stream (5) is stopped. This step or operation is herein referred to as Light Component Depressurization (LCD).

In one particular embodiment, optionally in combination with one or more features of the various embodiments described above or below, in step c) the bed system (2) is depressurized until a pressure which is from 0.5 to 1 times, e.g., 0.5, 0.6, 0.7, 0.8, 0.9, 1 times the pressure of step a) (LPF) provided that the pressure of this step is lower than the pressure of the previous step. In another particular embodiment, optionally in combination with one or more features of the various embodiments described above or below, in step c) the bed system (2) is depressurized until a pressure which is from 0.5 to 0.9 times, e.g., 0.5, 0.6, 0.7, 0.8, 0.9 times the pressure of step a) (LPF). More particularly, in step c) the bed system (2) is depressurized until a pressure which is about the pressure of step a) (LPF).

In one particular embodiment, optionally in combination with one or more features of the various embodiments described above or below, the light-component-enriched-stream (5) is let out through an outlet located at the top of the bed system (2).

The concentration of the heavy gas component in the light-component-enriched-stream (5) can be monitored by an appropriate sensor. As mentioned above, for carbon dioxide, non-dispersive infrared absorption (NDIR) carbon dioxide sensors can be used. In order to optimize the process, steps b) HPR and c) LCD are repeated until the relative concentration of the heavy gas component in the light-component-enriched-stream (5) with respect to the concentration of the heavy gas component in the heavy-component-enriched-stream (4) is equal to or higher than 5 mol%, more particularly equal to or higher than 10 mol%, 15 mol%, 20 mol%, 25 mol%, 30 mol%.

Desorption

In the last step of the process of the invention (step e), the heavy gas component is desorbed from the bed system (2) in the form of a heavy-component-enriched-stream (6) (see Figure 1) containing the heavy gas component in a concentration equal to or higher than 85 mol%, more particularly equal to or higher than 80 mol%, 85 mol%, 90 mol%, 91 mol%, 92 mol%, 93 mol%, 94 mol%, 95 mol%, 96 mol%, 97 mol%, 98 mol%, 99 mol%, and 99.9 mol%, with respect to the total heavy-component-enriched-stream. Furthermore, the adsorbent material is regenerated before a new cycle starts.

In one particular embodiment, optionally in combination with one or more features of the various embodiments described above or below, the desorption in step e) is carried out by lowering the total pressure, more particularly by lowering the total pressure under atmospheric pressure. When the desorption is carried out by lowering the total pressure, the process has the advantage that it may be implemented under a wide range of ambient temperatures and concentrations of heavy gas component in the gas mixture since the parameters of the process can be adapted for a given concentration of heavy gas component in the gas mixture in each case, which makes the process more versatile and flexible. Furthermore, the energy consumption that is generally involved for the control of the temperature is avoided, this lowering the total energy consumption used in the process.

In a particular embodiment, optionally in combination with one or more features of the various embodiments described above or below, step e) comprises:

i) depressurizing the bed system (2) by letting out a first portion of heavy-component-enriched-stream (6A);
ii) applying vacuum to the bed system (2) and sucking a second portion of heavy-component-enriched-stream (6B);
iii) purging the bed system (2) by introducing a light-component-enriched-stream (8) into the bed system (2) and letting out a light-component-enriched-stream (7).

Figure 2 is a schematic flow diagram illustrating a particular embodiment of step e) of the process of the invention comprising steps i) to iii) which is carried out in a bed system (2).

Heavy Component Reflux (HCR)

In step ei) the bed system (2) is depressurized by letting out a first portion of heavy-component-enriched-stream (6A) (see Figure 2). This step or operation is herein referred to as Heavy Component Reflux (HCR)

In one particular embodiment, optionally in combination with one or more features of the various embodiments described above or below, the pressure is lowered until a pressure equal to or lower than the pressure at which Low-pressure Feed (LPF) step a), this pressure being from 100 to 600 KPa, e.g., 100, 200, 300, 400, 500, 600 KPa. Once this pressure is reached, the removal of the heavy-component-enriched-stream (6) is stopped.

In a more particular embodiment, the pressure of step ei) is lowered until a pressure which is from 0.2 to 1 times, e.g. 0.2, 0.3, 0.4, 0.5, 0.6, 0.7, 0.8, 0.9, 1 times the pressure of step a) (LPF). More particularly, in step ei) the removal of the heavy-component-enriched-stream (6A) is stopped when the pressure in the bed system (2) is from 0.2 to 0.9 times the pressure of step a). More particularly, the pressure of step ei) is lowered until a pressure which is about 0.5 times the pressure at which LPF step a) operates.

In one particular embodiment, optionally in combination with one or more features of the various embodiments described above or below, the heavy-component-enriched-stream (6A) is let out through an outlet located at the bottom of the bed system (2).

Low-pressure Recuperation (LPR)

In step eii) vacuum is applied to the bed system (2) and a second portion of heavy-component-enriched-stream (6B) is sucked (see Figure 2). This pressure is generally lower than atmospheric pressure. For example, the pressure can typically be from 0.2 to 10 KPa, more particularly from 0.5 to 5 KPa, even more particularly from 0.6 to 1 KPa. The lowest pressure of the system is achieved in this step. The objective of this step is to help in the regeneration of the adsorbent by displacing the adsorbed heavy gas component. Most of the heavy gas component is recovered in this step. This step or operation is herein referred to as Low-pressure Recuperation (LPR) and is slower than HCR.

Depending on the purity and recovery of the heavy gas component, higher or lower vacuum will be applied. Generally, the higher the purity needed, the higher the applied vacuum and the higher is the electric consumption.

If desired, the heavy-component-enriched-stream (6A) and (6B) may be combined and stored in a tank. When the process is performed continuously, the heavy-component-enriched stream (6A) and/or (6B) may be used in the enrichment step (High-pressure Reflux, HPR). Thus, in one particular embodiment, optionally in combination with one or more features of the various embodiments described above or below, the heavy-component-enriched-stream (4) is the heavy-component-enriched stream (6A) and/or (6B) obtained in step eii).

It is advantageous to stop the vacuum at a specific time to increase the efficiency of the process. Thus, exiting gas flow is monitored in this step. For example, this can be done by thermal dispersion mass flow meters located in the vacuum pump exhaust. Therefore, in one particular embodiment, optionally in combination with one or more features of the various embodiments described above or below, in step eii) vacuum is stopped when the relative volume of the heavy-component-enriched-stream (6B) with respect to the total volume of the bed system is equal to or lower than 20%, more particularly equal or lower than 15%.

The suction of the heavy-component-enriched-stream (6B) is carried out through an outlet that may be located at different positions. Thus, the outlet may be located along the axial part (see Figure 2) or at the bottom (not shown) of the bed system (2).

The advantage of applying vacuum along the axial part of the column (i.e., laterally) is to decrease the mass transfer resistances for the heavy-component-enriched-stream to exit the column is lower than if the vacuum is applied at the bottom of the column as previously described. As a result, the time of this step is shortened and therefore, this leads to energy saving and a reduction of costs. In one particular embodiment, optionally in combination with one or more features of the various embodiments described above or below, the inlet located along the axial part is placed at a distance from 0.2 to 0.8 times, more particularly from 0.25 to 0.5 times, even more particularly from 0.3 to 0.4 times, the total length of the bed system.

Therefore, in one particular embodiment, optionally in combination with one or more features of the various embodiments described above or below, in step ii) the second portion of heavy-component-enriched-stream (6B) is sucked through an outlet located along an axial part of the adsorber bed (2), more particularly, the inlet along the axial part is placed at a distance from 0.2 to 0.8 times, more particularly from 0.25 to 0.5 times, even more particularly from 0.3 to 0.4 times, the total length of the bed system.

In one alternative embodiment, optionally in combination with one or more features of the various embodiments described above or below, in step eii) the second portion of heavy-component-enriched-stream (6B) is sucked through an outlet located at the bottom of the bed system (2).

Purge

In step eiii) the bed system (2) can be purged by introducing a light-component-enriched-stream (8) into the bed system (2) and letting out a light-component-enriched-stream (7) (see Figure 2). The objective of this step is to help in the regeneration of the adsorbent by displacing small amounts of the adsorbed heavy gas component that have not been removed in the previous steps.

In one particular embodiment, optionally in combination with one or more features of the various embodiments described above or below, in step c) the bed system (2) is depressurized until a pressure which is from 0.5 to 1 times, e.g., 0.5, 0.6, 0.7, 0.8, 0.9, 1 times the pressure of step a) (LPF). More particularly, in step c) the bed system (2) is depressurized until a pressure which is about the pressure of step a) (LPF).

It is advantageous to stop the purge at a specific time to increase the efficiency of the process. Thus, in one particular embodiment, optionally in combination with one or more features of the various embodiments described above or below, in step eiii) the introduction of light-component-enriched-stream (8), and the removal of light-component-enriched-stream (7) is stopped when the relative concentration of the heavy gas component in the light-component-enriched-stream (7) with respect to the concentration of the heavy gas component in the feed mixture (1) is equal to or lower than 80 mol% more particularly equal or lower than 70 mol%, 60 mol%, 50 mol%, 40 mol%, 30 mol%.

In one embodiment, optionally in combination with one or more features of the various embodiments described above or below, the introduction of the light-component-enriched-stream (8) is carried out by two streams, 8A and 8B (see Figure 3).

In one embodiment, after the purge step the pressure is near to the atmospheric pressure due to the fact that the outlet of the bed system is open thus allowing the free circulation through to the bed. The introduction of the light-component-enriched-stream (8, or 8a and 8b) into the bed system (2), and the removal of light-component-enriched-stream (7) is carried out through an inlet and an outlet, respectively, which may be located at different positions. Thus, the outlet may be located along the axial part (lateral outlet), at the bottom part, or at the top of the bed system (2).

The evacuation of the light-component-enriched-stream through the axial part has the advantage that this step can be performed at lower pressure, since the multicomponent gas mixture has to go counter current through the bed system. In one particular embodiment, optionally in combination with one or more features of the various embodiments described above or below, the outlet located along the axial part is placed at a distance from 0.2 to 0.8 times, more particularly from 0.25 to 0.5 times, even more particularly from 0.3 to 0.4 times, the total length of the bed system.

Therefore, in one particular embodiment, optionally in combination with one or more features of the various embodiments described above or below, in step eiii) the light-component-enriched-stream (8) is introduced through the top of the bed system (2), and the light-component-enriched-stream (7) is let out through the axial part of the bed system (2) (see Figure 2), more particularly, the outlet along the axial part is placed at a distance from 0.2 to 0.8 times, more particularly from 0.25 to 0.5 times, even more particularly from 0.3 to 0.4 times, the total length of the bed system.

In one alternative embodiment, optionally in combination with one or more features of the various embodiments described above or below, in step eiii) the light-component-enriched-stream (8) is introduced through an inlet located at the top of the bed system (2), and the heavy-component-enriched-stream (7) is let out through an outlet located at the bottom of the bed system (2) (not shown).

In another particular embodiment, optionally in combination with one or more features of the various embodiments described above or below, in step eiii) the light-component-enriched-stream (8A and 8B) are introduced through top and the bottom of the bed system (2), respectively, and the light-component-enriched-stream (7) is let out through the axial part of the bed system (2) (see Figure 3), more particularly, the outlet along the axial part is placed at a distance from 0.2 to 0.8 times, more particularly from 0.25 to 0.5 times, even more particularly from 0.3 to 0.4 times, the total length of the bed system. When this configuration is used, this step or operation is herein referred to as Bidirectional Purge (BDP).

When the process is performed continuously, and the process comprises a purge step, then the light-component-enriched-stream (3) obtained in the Low-pressure Feed (LPF) is the light-component-enriched-stream (8, or 8A and (B) obtained in the Bidirectional Purge (BDP).

Equalization Pressurization (EQ)

To take advantage of the energy expended in compression during the HPR step, the process of the invention may further reuse the compressed energy in the equalization step (EQ). This step has the advantage that when used there a fraction of the total energy needed in the Low-pressure Feed (LPF) step is saved. Thus, in one particular embodiment, optionally in combination with one or more features of the various embodiments described above or below, the process of the invention further comprises an equalization step f) after step e), which comprises pressurizing the adsorption bed (2) by introducing a heavy-component-enriched-stream (9) until the pressure in the adsorption bed (2) is from 0.2 to 1 times, e.g. 0.2, 0.3, 0.4, 0.5, 0.6, 0.7, 0.8, 0.9, 1 times the pressure of step a) (LPF). More particularly, the pressure of step ei) is lowered until a pressure which is about 0.5 times the pressure used in the LPF step. The pressure reached in this step is higher than the pressure at which the purge step iii) operates.

When the process is performed continuously, and the process comprises a purge step, then the light-component-enriched-stream (9) is the light-component-enriched-stream (6A) obtained in the heavy component reflux (HCR).

Depending on the specific needs, the skilled person will know how to adjust the particular conditions, operations and configuration of the separation unit taking into account the information disclosed herein as well as the common general knowledge.

In one particular embodiment, optionally in combination with one or more features of the various embodiments described above or below, the invention relates to an adsorption-desorption process for the recovery of a heavy gas component from a multicomponent gas mixture comprising a heavy gas component which is carbon dioxide, and a light gas component which is nitrogen, wherein the process comprises at least one cycle of steps carried out in a bed system, wherein the steps of one cycle comprise:

a) introducing a multicomponent gas mixture (1) at a pressure from 100 to 600 KPa into a bed system (2) which is a hollow structure enclosing an interior volume which contains an adsorbent, and which has a length which is higher than its diameter, wherein the adsorbent that retains the heavy gas component of the multicomponent gas mixture (1), while letting out a light-component-enriched-stream (3) from the bed system (2);

b) pressurizing the bed system (2) by introducing a heavy-component-enriched-stream (4) into the bed system (2), until a pressure which is from 1.1 to 3 times the pressure of step a), this pressure being from 110 to 900 KPa; and then stopping feeding (4);

c) depressurizing the bed system (2) by letting out a light-component-enriched-stream (5) from the bed system (2), until a pressure which is from 0.5 to 1 times the pressure of step a), this pressure being from 100 to 600 KPa; and then stopping the removal of the light-component-enriched-stream (5);

d) repeating steps b) and c) until the relative concentration of the heavy gas component in the light-component-enriched-stream (5) with respect to the concentration of the heavy gas component in the heavy-component-enriched-stream (4) is equal to or higher than 5 mol%,

e) desorbing the heavy gas component from the bed system (2) in the form of a heavy-component-enriched-stream (6B) containing the heavy gas component in an amount equal to or higher than 85 mol%, with respect to the total heavy-component-enriched-stream; and regenerating the adsorbent; wherein step e) comprises:

(i) depressurizing the bed system (2) by letting out a first portion of heavy-component-enriched-stream (6A);
(ii) applying vacuum to the bed system (2) and sucking a second portion of heavy-component-enriched-stream (6B);
(iii) purging the bed system (2) by introducing a light-component-enriched-stream (6a and 6b) into the bed system (2), and letting out a light-component-enriched-stream (7);

f) pressurizing the adsorption bed (2) by introducing a light-component-enriched-stream (9) until the pressure in the adsorption bed (2) is from 0.2 to 1 times, more particularly about 0.5 times the pressure used in step a), and then stopping the reflux (9).

The above process comprising steps a) to f), which is illustrated schematically in Figure 3, is described for one cycle for one bed. This process comprises 7 different operations: Low-pressure Feed (LPF) (1), High-pressure Reflux (HPR) (2), Light Component Depressurization (LCD) (3), Heavy Component Reflux (HCR) (4), Low-pressure Recuperation (LPR) (5), Bidirectional Purge (BDP) (6), and Pressure Equalization (EQP) (7).

In one particular embodiment, optionally in combination with one or more features of the various embodiments described above or below, the process of the invention comprising steps a) to f) is continuous and comprises at least two cycles as defined above. More particular, in this embodiment, the heavy-component-enriched-stream (4) is the heavy-component-enriched stream (6A) and/or (6B) obtained in the High Component Reflux (HCR) and Low-pressure Recuperation (LPR), respectively; the light-component-enriched-stream (3) is the light-component-enriched-stream (8, or 8A and 8B) obtained in the purge; and the light-component-enriched-stream (6A) is the light-component-enriched-stream (9).

When the process operates continuously it is advantageous to carry out simultaneously different cycles of the process in different bed systems such that feed-into and feed-effluent are continuous. At any time during any of these processes, the beds will be operating different steps of the process.

In one particular embodiment, optionally in combination with one or more features of the various embodiments described above or below, the process of the invention comprises three bed systems, and each bed performs a cycle. The three bed systems operate independently, and the product streams recovered from the individual adsorbers are combined to provide a continuous flow of the product stream containing the heavy gas component at the desired purity. Besides, the use of more than one bed system makes it possible for one bed system to equalize or pressurize another bed system, thereby reducing the energy consumption.

Preferably, the steps of one cycle are balanced so that each bed system operates different steps/operations of the cycle. This configuration has the advantage that cycle operation is balanced and idle time for the adsorbers is eliminated. As a consequence, the process is more efficient.

As an example, when the above process comprising steps a) to e) is performed in three bed systems, bed system 1 goes through operation (1), while bed system 2 executes operations (5)-(7), and bed system 3 goes thorough operations (2)-(4). When bed system 1 goes through operations (2)-(4), bed system 2 executes operations (1) and bed system 3 executes operation (5)-(7). And finally, when bed system 1 goes through operations (5)-(7), bed system 2 executes operations (2)-(4), and bed system 3 goes through operation (1), wherein operation (1) is Low-pressure Feed (LPF), operation (2) is High-pressure Reflux (HPR), operation (3) is Light Component Depressurization (LCD), operation (4) is Heavy Component Reflux (HCR), operation (5) is Low-pressure Recuperation (LPR), operation (6) is Bidirectional Purge (BDP), and operation (7) is Equalization Pressurization (EQP). This configuration is shown in Table 1 below.

Table 1

| Bed system 1 | 1 | | | 2 | 3 | 4 | 5 | 6 | 7 |
|---|---|---|---|---|---|---|---|---|---|
| | LPF | | | HPR | LCD | HCR | LPR | BDP | EQP |
| Bed system 2 | 5 | 6 | 7 | 1 | | | 2 | 3 | 4 |
| | LPR | BDP | EQP | LPF | | | HPR | LCD | HCR |
| Bed system 3 | 2 | 3 | 4 | 5 | 6 | 7 | 1 | | |
| | HPR | LCD | HCR | LPR | BDP | EQP | LPF | | |

The process of the invention may be adapted depending to the needed production of heavy gas component. If desired, the production capacity may be increased by using column blocks that operate in parallel or in row. Thus, in one particular embodiment, optionally in combination with one or more features of the various embodiments described above or below, each of the bed systems that performs a cycle of the process of the invention comprises one or more single beds connected to each other in parallel or in row. More particularly, each of the bed systems comprises from 1 to 32 single-beds.

If desired, once the heavy gas component is obtained in the form of heavy-component-enriched-stream may be further purified by conventional methods. For example, it may be liquefied.

As the skilled in the art knows, when the process is implemented for the first time, some parameters need to be adjusted. In the process of the invention, for example, if no heavy-component-enriched-stream is available for pressurizing and enriching the bed system in the High-pressure Reflux operation (HPR) then, a multicomponent gas mixture may be used.

When the process is continuously operated, a cyclic steady state is reached where the desired performance objectives should be reached. For the purposes of the invention, the term cyclic steady state (CSS) refers to that stage at which the conditions in each bed system at the start and end of each cycle are identical.

Once the CSS is reached, some process performance Indicators can be measured in order to assess the efficacy of the separation process. These indicators include for example, product purity, product recovery, product productivity, and energy consumption. These indicators may be calculated as follows:

$$\text{product purity (\%)} = \frac{\text{moles of heavy gas component in the heavy-component-enriched-stream (6A, 6B)}}{\text{total moles of heavy-component-enriched-stream (6A, 6B)}} \times 100$$

$$\text{product recovery (\%)} = \frac{\text{moles of heavy gas component in the heavy-component-enriched-stream (6A, 6B)}}{\text{moles of heavy gas component in the feed stream (1)}} \times 100$$

$$\text{productivity (KgCO}_2\text{/Kg}_{Ads}\cdot\text{h)} = \frac{\text{Kg of heavy gas component in the heavy-component-enriched-stream (6A, 6B)}}{\text{(Mass of adsorbent used) x (cycle time)}}$$

Finally, the energy consumption is the sum of all compression and vacuum sources used.

Usually, all process performance indicators are calculated at cyclic steady state (CSS) conditions. When CSS is achieved, the performance of the cycles is constant over time, i.e., the conditions in each bed at the start and end of each cycle are identical.

In some embodiments of the invention, more than one heavy-component-enriched-stream is obtained. These streams are conducted to a storage tank. In this case, the product purity and recovery are calculated taking a sample of the stream stored in the tank.

In the process of the invention, the product purity of the heavy gas component is generally equal to or higher than 70%, more particularly equal to or higher than 80 %, 85%, 90%, 91%, 92%, 93%, 94%, 95%, 96%, 97%, 98%, 99%, and 99.9%, with respect to the total heavy-component-enriched-stream.

Furthermore, the product recovery is typically equal to or higher than 40%, more particularly from 40 to 95%, even more particularly 60-80%.

The heavy gas component obtained according to the invention, carbon dioxide, may be used for any desired purpose such as food processing, preservation and packaging, water treatment, or stunning of swine and poultry, for example.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim.

**Examples**

Pilot-scale experiments were carried out using the system shown in Figure 3 and Table 1. The initial gas mixture contained 16 mol% carbon dioxide, 0.05 mol% water, the remaining being nitrogen. The system included 3 bed adsorbers (anodized aluminum, Height: 428 mm, diameter: 25 mm, lateral inlets located at 0.15 mm from the bottom of the bed system). The adsorbent used was Zeolite 13X Binderless (128 g per bed; pellet diameter 1.2-2.0 mm; apparent density 620 - 700 g/L).

The temperature at which the system was operated was 20 °C. Steps LPF and HPR were performed at 200 KPa and 400 KPa, respectively. Steps LCD and HCR, BDP and EQP were performed at 200 KPa, 100 KPa, 200 KPa and 100 KPa, respectively. All pressure values could comprise variations $\pm$ 30KPa. The flow in LPF and HPR was 0.8 mol/min. The flow in LPR was 0.2 mol/min.

Steps LPF, BDP, and the repetition of steps HCR-LPR were stopped at the values indicated in Table 2 below. The bed regeneration was performed by vacuum (specific pressure shown in Table 2). Vacuum was stopped when the relative volume of the heavy-component-enriched-stream (6B) with respect to the total volume of the bed system was equal to 15%.

Table 2

| Experiment | Pressure of LPR step (KPa) | $CO_2$ concentration LCD (mol%)[1] | $CO_2$ concentration LPF (mol%)[2] | $CO_2$ concentration BDP (mol%)[3] |
|---|---|---|---|---|
| 1 | 0.850 | 10 | 10 | 30 |
| 2 | 0.900 | 30 | 10 | 70 |
| 3 | 0.950 | 10 | 30 | 70 |
| 4 | 0.980 | 10 | 10 | 30 |
| 5 | 0.980 | 10 | 30 | 30 |
| 6 | 0.980 | 30 | 30 | 70 |

[1] relative concentration of the heavy gas component in the light-component-enriched-stream (5) with respect to the concentration of the heavy gas component in the heavy-component-enriched-stream (4) expressed as %
[2] relative concentration of the heavy gas component in the light-component-enriched-stream (3) with respect to the concentration of the heavy gas component in the feed mixture (1) expressed as %. [3] relative concentration of the heavy gas component in the light-component-enriched-stream (7) with respect to the concentration of the heavy gas component in the feed mixture (1) expressed as %.

The following results were obtained:

Table 3

| Experiment | Recovery % | Purity % | Productivity (KgCO$_2$/Kg$_{Ads}$·h) | Consumption (MJ/Kg·CO$_2$) |
|---|---|---|---|---|
| 1 | 60 | 85 | 0.124 | 2.75 |

(continued)

| Experiment | Recovery % | Purity % | Productivity (KgCO$_2$/Kg$_{Ads}$·h) | Consumption (MJ/Kg·CO$_2$) |
|---|---|---|---|---|
| 2 | 67 | 92 | 0.129 | 2.59 |
| 3 | 88 | 90 | 0.132 | 2.48 |
| 4 | 77 | 99 | 0.135 | 2.22 |
| 5 | 72 | 87 | 0.124 | 2.88 |
| 6 | 73 | 90 | 0.133 | 2.58 |

The above pilot-scale experiments show that the process of the invention allows the separation of CO$_2$ in good yields and purity and at reasonable energetic consumption.

## Citation List

Seul-Yi Lee, Soo-Jin Park, "A review on solid adsorbents for carbon dioxide capture", Journal of Industrial and Engineering Chemistry 2015, Vol. 23, Pages 1-11.

## Claims

1. An adsorption-desorption process for the recovery of a heavy gas component from a multicomponent gas mixture which comprises a heavy gas component which is carbon dioxide and a light gas component which is nitrogen, wherein the process comprises at least one cycle of steps carried out in a bed system, wherein the steps of one cycle comprise:

    a) introducing a multicomponent gas mixture (1) at a pressure from 100 to 600 KPa into a bed system (2) which is a hollow structure enclosing an interior volume which contains an adsorbent and which has a length which is higher than its diameter, wherein the adsorbent that retains the heavy gas component of the multicomponent gas mixture (1), while letting out a light-component-enriched-stream (3) from the bed system (2);
    b) pressurizing the bed system (2) by introducing a heavy-component-enriched-stream (4) into the bed system (2), until a pressure which is from 1.1 to 3 times the pressure of step a), this pressure being from 110 to 900 KPa; and then stopping feeding (4);
    c) depressurizing the bed system (2) by letting out a light-component-enriched-stream (5) from the bed system (2), until a pressure which is from 0.5 to 1 times the pressure of step a), this pressure being from 100 to 600 KPa; and then stopping the removal of the light-component-enriched-stream (5);
    d) repeating steps b) and c) until the relative concentration of the heavy gas component in the light-component-enriched-stream (5) with respect to the concentration of the heavy gas component in the heavy-component-enriched-stream (4) is equal to or higher than 5 mol%;
    e) desorbing the heavy gas component from the bed system (2) to give heavy-component-enriched-stream (6) containing the heavy gas component; and regenerating the adsorbent.

2. The process according to claim 1, wherein the pressure of step b) is from 200 to 900 KPa.

3. The process according to any one of claims 1-2, wherein the multicomponent gas mixture comprises at least nitrogen in an amount from 50 to 95 mol%, and carbon dioxide in an amount from 7 to 20 mol%, wherein the % are given with respect to the total amount of moles in the mixture, provided that the sum of the amounts of the components of the multicomponent gas mixture is equal to 100%.

4. The process according to any one of claims 1-3, wherein the multicomponent gas mixture is flue gas.

5. The process according to any one of claims 1-4, wherein the adsorbent is selected from the group consisting of activated carbon, zeolite, aluminosilicates, silica gel, activated alumina, carbon molecular sieves (CMSs), and combinations thereof.

6. The process according to any one of claims 1-5, wherein in step a) the feeding of the multicomponent gas mixture (1), and the removal of the light-component-enriched-stream (3) is stopped when the relative concentration of the heavy gas component in the light-component-enriched-stream (3) with respect to the concentration of the heavy gas component in the feed mixture (1) is from 1 to 30 mol%.

7. The process according to any one of claims 1-6, wherein in step a) the multicomponent gas mixture (1) is introduced through an inlet located at an axial part of the bed system (2), being the axial part the longer part of the bed system, and the light-component-enriched-stream (3) is let out through an outlet located at the bottom of the bed system (2).

8. The process according to any one of claims 1-7, wherein step e) comprises:

    i) depressurizing the bed system (2) by letting out a first portion of heavy-component-enriched-stream (6A);
    ii) applying vacuum to the bed system (2) and sucking a second portion of heavy-component-enriched-stream (6B);
    iii) purging the bed system (2) by introducing a light-component-enriched-stream (8) into the bed system (2), and letting out a light-component-enriched-stream (7).

9. The process according to claim 8, wherein in step i) the removal of the heavy-component-enriched-stream (6A) is stopped when the pressure in the bed system (2) is from 0.2 to 0.9 times the pressure of step a).

10. The process according to any one of claims 8-9, wherein in step ii) vacuum is stopped when the relative volume of the heavy-component-enriched-stream (6B) with respect to the total volume of the bed system is equal to or lower than 20%.

11. The process according to any one of claims 8-10, wherein in step ii) the second portion of heavy-component-enriched-stream (6B) is sucked through an outlet located along an axial part of the bed system (2), being the axial part the longer part of the bed system.

12. The process according to any one of claims 8-11, wherein in step iii) the introduction of light-component-enriched-stream (8), and the removal of light-component-enriched-stream (7) is stopped when the relative concentration of the heavy gas component in the light-component-enriched-stream (7) with respect to the concentration of the heavy gas component in the feed mixture (1) is equal to or lower than 80 mol%.

13. The process according to any one of claims 8-12, wherein in step iii) the light-component-enriched-stream (8) is introduced through two inlets located at the top (8A) and at the bottom (8B) of the bed system (2), and the light-component-enriched-stream (7) is let out through an inlet located at an axial part of the bed system (2), being the axial part the longer part of the bed system.

14. The process according to any one of claims 8-13, further comprising an equalization step f) after step e) which comprises pressurizing the adsorption bed (2) by introducing a light-component-enriched-stream (9) until the pressure in the adsorption bed (2) is from 0.2 to 1 times the pressure used in the LPF step, and then stopping feeding (7).

15. The process according to any one of claims 1-14, which comprises three bed systems, and each bed performs one cycle of steps.

16. The process according to any one of claims 1-15, wherein each of the bed systems comprises one or more single beds connected to each other in parallel or in row.

**Patentansprüche**

1. Ein Adsorptions-Desorptions-Verfahren zur Gewinnung einer schweren Gaskomponente aus einem Mehrkomponenten-Gasgemisch, das eine schwere Gaskomponente, die Kohlendioxid ist, und eine leichte Gaskomponente, die Stickstoff ist, umfasst, wobei das Verfahren mindestens einen Zyklus von Schritten umfasst, der in einem Bettsystem durchgeführt wird, wobei die Schritte eines Zyklus Folgendes umfassen:

    a) einleiten eines Mehrkomponenten-Gasgemisches (1) mit einem Druck von 100 bis 600 kPa in ein Bettsystem (2), welches eine Hohlstruktur ist, die ein Innenvolumen einschließt, welches ein Adsorptionsmittel enthält und welches eine Länge aufweist, die größer als sein Durchmesser ist, wobei das Adsorptionsmitte die schwere Gaskomponente des Mehrkomponenten-Gasgemisches (1) zurückhält, während ein mit leichten Komponenten angereicherter Strom (3) aus dem Bettsystem (2) abgelassen wird;

b) Druckbeaufschlagung des Bettsystems (2) durch Einleiten eines mit schweren Komponenten angereicherten Stroms (4) in das Bettsystem (2), bis ein Druck erreicht ist, der das 1,1- bis 3-fache des Drucks von Schritt a) beträgt, wobei dieser Druck von 110 bis 900 kPa beträgt; und dann Stoppen der Zufuhr (4);

c) Druckentlastung des Bettsystems (2) durch Ablassen eines mit leichten Komponenten angereicherten Stroms (5) aus dem Bettsystem (2), bis ein Druck erreicht ist, der das 0,5- bis 1-fache des Drucks von Schritt a) beträgt, wobei dieser Druck von 100 bis 600 kPa beträgt; und dann Stoppen des Entfernens des mit leichten Komponenten angereicherten Stroms (5);

d) wiederholen der Schritte b) und c), bis die relative Konzentration der schweren Gaskomponente in dem mit leichten Komponenten angereicherten Strom (5) in Bezug auf die Konzentration der schweren Gaskomponente in dem mit Schwerkomponenten angereicherten Strom (4) gleich oder größer als 5 Mol-% ist;

e) desorbieren der schweren Gaskomponente aus dem Bettsystem (2), um einen mit schweren Komponenten angereicherten Strom (6) zu ergeben, der die schwere Gaskomponente enthält; und Regenerieren des Adsorptionsmittels.

2. Das Verfahren nach Anspruch 1, wobei der Druck von Schritt b) von 200 bis 900 KPa beträgt.

3. Das Verfahren nach einem der Ansprüche 1 bis 2, wobei das Mehrkomponenten-Gasgemisch mindestens Stickstoff in einer Menge von 50 bis 95 Mol-% und Kohlendioxid in einer Menge von 7 bis 20 Mol-% umfasst, wobei die % in Bezug auf die Gesamtmenge der Mole in dem Gemisch angegeben sind, mit der Maßgabe, dass die Summe der Mengen der Komponenten des Mehrkomponenten-Gasgemisches gleich 100% ist.

4. Das Verfahren nach einem der Ansprüche 1 bis 3, wobei das Mehrkomponenten-Gasgemisch Rauchgas ist.

5. Das Verfahren nach einem der Ansprüche 1 bis 4, wobei das Adsorptionsmittel ausgewählt ist aus der Gruppe bestehend aus aktiviertem Kohlenstoff, Zeolith, Alumosilikaten, Silicagel, aktiviertem Aluminiumoxid, Kohlenstoffmolekularsieben (CMS) und Kombinationen davon.

6. Das Verfahren nach einem der Ansprüche 1 bis 5, wobei in Schritt a) das Zuführen des Mehrkomponenten-Gasgemisches (1) und das Entfernen des mit leichten Komponenten angereicherten Stroms (3) gestoppt wird, wenn die relative Konzentration der schweren Gaskomponente in dem mit leichten Komponenten angereicherten Strom (3) in Bezug auf die Konzentration der schweren Gaskomponente in der Beschickungsmischung (1) von 1 bis 30 Mol-% beträgt.

7. Das Verfahren nach einem der Ansprüche 1 bis 6, wobei in Schritt a) das Mehrkomponenten-Gasgemisch (1) durch einen Einlass eingeführt wird, der sich an einem axialen Teil des Bettsystems (2) befindet, wobei der axiale Teil der längere Teil des Bettsystems ist, und der mit leichten Komponenten angereicherte Strom (3) durch einen Auslass abgelassen wird, der sich am Boden des Bettsystems (2) befindet.

8. Das Verfahren nach einem der Ansprüche 1 bis 7, wobei der Schritt e) Folgendes umfasst:

i) Druckentlastung des Bettsystems (2) durch Ablassen eines ersten Teils eines mit schweren Komponenten angereicherten Stroms (6A);

ii) Anlegen eines Vakuums an das Bettsystem (2) und Ansaugen eines zweiten Teils des mit schweren Komponenten angereicherten Stroms (6B);

iii) Spülen des Bettsystems (2) durch Einleiten eines mit leichten Komponenten angereicherten Stroms (8) in das Bettsystem (2), und Auslassen eines mit leichten Komponenten angereicherten Stroms (7).

9. Das Verfahren nach Anspruch 8, wobei in Schritt i) das Entfernen des mit schweren Komponenten angereicherten Stroms (6A) gestoppt wird, wenn der Druck in dem Bettsystem (2) das 0,2- bis das 0,9-fache des Drucks von Schritt a) beträgt.

10. Das Verfahren nach einem der Ansprüche 8 bis 9, wobei in Schritt ii) das Vakuum gestoppt wird, wenn das relative Volumen des mit schweren Komponenten angereicherten Stroms (6B) in Bezug auf das Gesamtvolumen des Bettsystems gleich oder kleiner als 20% ist.

11. Das Verfahren nach einem der Ansprüche 8 bis 10, wobei in Schritt ii) der zweite Teil des mit schweren Komponenten angereicherten Stroms (6B) durch einen Auslass gesaugt wird, der sich entlang eines axialen Teils des Bettsystems (2) befindet, wobei der axiale Teil der längere Teil des Bettsystems ist.

**12.** Das Verfahren nach einem der Ansprüche 8 bis 11, wobei in Schritt iii) die Einführung des mit leichten Komponenten angereicherten Stroms (8) und das Entfernen des mit leichten Komponenten angereicherten Stroms (7) gestoppt wird, wenn die relative Konzentration der schweren Gaskomponente in dem mit leichten Komponenten angereicherten Strom (7) in Bezug auf die Konzentration der schweren Gaskomponente in der Beschickungsmischung (1) gleich oder kleiner als 80 Mol-% ist.

**13.** Das Verfahren nach einem der Ansprüche 8 bis 12, wobei in Schritt iii) der mit leichten Komponenten angereicherte Strom (8) durch zwei Einlässe eingeführt wird, die sich am oberen Ende (8A) und am unteren Ende (8B) des Bettsystems (2) befinden, und der mit leichten Komponenten angereicherte Strom (7) durch einen Einlass abgelassen wird, der sich an einem axialen Teil des Bettsystems (2) befindet, wobei der axiale Teil der längere Teil des Bettsystems ist.

**14.** Das Verfahren nach einem der Ansprüche 8 bis 13, weiterhin umfassend einen Ausgleichsschritt f) nach Schritt e), welcher die Druckbeaufschlagung des Adsorptionsbettes (2) durch Einführen eines mit leichten Komponenten angereicherten Stroms (9), bis der Druck in dem Adsorptionsbett (2) das 0,2- bis das 1-fache des in dem LPF-Schritt verwendeten Druckes beträgt, und dann das Stoppen der Zufuhr (7) umfasst.

**15.** Das Verfahren nach einem der Ansprüche 1 bis 14, welches drei Bettsysteme umfasst und jedes Bett einen Zyklus von Schritten ausführt.

**16.** Das Verfahren nach einem der Ansprüche 1 bis 15, wobei jedes der Bettsysteme ein oder mehrere Einzelbetten umfasst, die parallel oder in Reihe miteinander verbunden sind.

**Revendications**

**1.** Un procédé d'adsorption-désorption pour la récupération d'un composant gazeux lourd à partir d'un mélange gazeux à plusieurs composants qui comprend un composant gazeux lourd qui est du dioxyde de carbone et un composant gazeux léger qui est de l'azote, dans lequel le procédé comprend au moins un cycle d'étapes réalisées dans un système de lit, dans lequel les étapes d'un cycle comprennent:

a) introduire un mélange gazeux à plusieurs composants (1) à une pression de 100 à 600 kPa dans un système de lit (2) qui est une structure creuse enfermant un volume intérieur qui contient un adsorbant et qui a une longueur qui est supérieure à son diamètre, dans lequel l'adsorbant retient le composant gazeux lourd du mélange gazeux à plusieurs composants (1), tout en permettant l'évacuation d'un courant enrichi en composant léger (3) du système de lit (2);

b) mettre sous pression le système de lit (2) en introduisant un courant enrichi en composant lourd (4) dans le système de lit (2), jusqu'à une pression qui est de 1,1 à 3 fois la pression de l'étape a), cette pression étant de 110 à 900 KPa; puis arrêter l'alimentation (4);

c) dépressuriser le système de lit (2) en permettant l'évacuation d'un courant enrichi en composant léger (5) du système de lit (2), jusqu'à une pression qui est de 0,5 à 1 fois la pression de l'étape a), cette pression étant de 100 à 600 KPa; puis arrêter l'élimination du courant enrichi en composant léger (5);

d) répéter les étapes b) et c) jusqu'à ce que la concentration relative du composant gazeux lourd dans le courant enrichi en composant léger (5) par rapport à la concentration du composant gazeux lourd dans le courant enrichi en composant lourd (4) soit égale ou supérieure à 5% en moles;

e) désorber le composant gazeux lourd du système de lit (2) pour obtenir un courant enrichi en composant lourd (6) contenant le composant gazeux lourd; et régénérer l'adsorbant.

**2.** Le procédé selon la revendication 1, dans lequel la pression de l'étape b) est de 200 à 900 kPa.

**3.** Le procédé selon l'une quelconque des revendications 1 à 2, dans lequel le mélange gazeux à plusieurs composants comprend au moins de l'azote en une quantité de 50 à 95% en moles, et du dioxyde de carbone en une quantité de 7 à 20% en moles, dans lequel les valeurs en % sont données par rapport à la quantité totale de moles dans le mélange, à condition que la somme des quantités des composants du mélange gazeux à plusieurs composants soit égale à 100%.

**4.** Le procédé selon l'une quelconque des revendications 1 à 3, dans lequel le mélange de gaz à plusieurs composants est un gaz de fumée.

**5.** Le procédé selon l'une quelconque des revendications 1 à 4, dans lequel l'adsorbant est choisi dans le groupe constitué par le charbon actif, la zéolite, les aluminosilicates, le gel de silice, l'alumine activée, les tamis moléculaires en carbone (CMS) et des combinaisons de ceux-ci.

**6.** Le procédé selon l'une quelconque des revendications 1 à 5, dans lequel, dans l'étape a), l'alimentation du mélange de gaz à plusieurs composants (1) et l'élimination du courant enrichi en composant léger (3) est arrêtée lorsque la concentration relative du composant gazeux lourd dans le courant enrichi en composant léger (3) par rapport à la concentration du composant gazeux lourd dans le mélange d'alimentation (1) est de 1 à 30% en moles.

**7.** Le procédé selon l'une quelconque des revendications 1 à 6, dans lequel, dans l'étape a), le mélange gazeux à plusieurs composants (1) est introduit par une entrée située à une partie axiale du système de lit (2), la partie axiale étant la partie la plus longue du système de lit, et le courant enrichi en composant léger (3) est évacué par une sortie située au fond du système de lit (2).

**8.** Le procédé selon l'une quelconque des revendications 1 à 7, dans lequel l'étape e) comprend:

i) dépressuriser le système de lit (2) en permettant l'évacuation d'une première partie du courant enrichi en composant lourd (6A);
ii) appliquer du vide au système de lit (2) et aspirer une seconde partie de courant enrichi en composant lourd (6B);
iii) purger le système de lit (2) en introduisant un courant enrichi en composant léger (8) dans le système de lit (2), et en permettant l'évacuation d'un courant enrichi en composant léger (7).

**9.** Le procédé selon la revendication 8, dans lequel à l'étape i) l'élimination du courant enrichi en composant lourd (6A) est arrêtée lorsque la pression dans le système de lit (2) est de 0,2 à 0,9 fois la pression de l'étape a).

**10.** Le procédé selon l'une quelconque des revendications 8 à 9, dans lequel dans l'étape ii) le vide est arrêté lorsque le volume relatif du courant enrichi en composant lourd (6B) par rapport au volume total du système de lit est égal ou inférieur à 20%.

**11.** Le procédé selon l'une quelconque des revendications 8 à 10, dans lequel, dans l'étape ii), la seconde partie du courant enrichi en composant lourd (6B) est aspirée à travers une sortie située le long d'une partie axiale du système de lit (2), la partie axiale étant la partie la plus longue du système de lit.

**12.** Le procédé selon l'une quelconque des revendications 8 à 11, dans lequel dans l'étape iii), l'introduction du courant enrichi en composant léger (8) et l'élimination du courant enrichi en composant léger (7) est arrêtée lorsque la concentration relative du composant gazeux lourd dans le courant enrichi en composant léger (7) par rapport à la concentration du composant gazeux lourd dans le mélange d'alimentation (1) est égale ou inférieure à 80% en moles.

**13.** Le procédé selon l'une quelconque des revendications 8 à 12, dans lequel, dans l'étape iii), le courant enrichi en composant léger (8) est introduit par deux entrées situées au sommet (8A) et au fond (8B) du système de lit (2), et le courant enrichi en composant léger (7) est évacué par une entrée située au niveau d'une partie axiale du système de lit (2), la partie axiale étant la partie la plus longue du système de lit.

**14.** Le procédé selon l'une quelconque des revendications 8 à 13, comprenant en outre une étape d'égalisation f) après l'étape e) qui comprend la mise sous pression du lit d'adsorption (2) en introduisant un courant enrichi en composant léger (9) jusqu'à ce que la pression dans le lit d'adsorption (2) soit de 0,2 à 1 fois la pression utilisée dans l'étape LPF, puis l'arrêt de l'alimentation (7).

**15.** Le procédé selon l'une quelconque des revendications 1 à 14, qui comprend trois systèmes de lits, et chaque lit effectue un cycle d'étapes.

**16.** Le procédé selon l'une quelconque des revendications 1 à 15, dans lequel chacun des systèmes de lits comprend un ou plusieurs lits individuels reliés les uns aux autres en parallèle ou en rangée.

a)   b)   c)   d)   e)

FIG. 1

ei)   eii)   eiii)

FIG. 2

1   2   3   4   5   6   7

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011315140 A
- WO 2009126607 A
- US 4770676 A
- US 2012279391 A

**Non-patent literature cited in the description**

- *Journal of Industrial and Engineering Chemistry,* 2015, vol. 23, 1-11
- **SEUL-YI LEE ; SOO-JIN PARK.** A review on solid adsorbents for carbon dioxide capture. *Journal of Industrial and Engineering Chemistry,* 2015, vol. 23, 1-11